# EUROPÄISCHE PATENTANMELDUNG

(11) **EP 2 026 004 A1**
(43) Veröffentlichungstag der Anmeldung: **18.02.2009**
(21) Anmeldenummer: 07015542.9
(22) Anmeldetag: 07.08.2007
(51) Int. Cl.: F23L 7/00

(54) **Verfahren zum Betrieb einer Verbrennungsanlage sowie Verbrennungsanlage**

(71) Anmelder: SIEMENS AKTIENGESELLSCHAFT, 80333 München (DE)
(72) Erfinder: Graeber, Carsten, 91056 Erlangen (DE); Jockenhoevel, Tobias Dr., 90419 Nürnberg (DE); Landes, Harald Dr., 90607 Rückersdorf (DE); Stuhlmüller, Franz, 91052 Erlangen (DE)

(57) **Zusammenfassung**

Die Erfindung betrifft eine Verbrennungsanlage mit einem Brenner und einer Membraneinheit, umfassend eine Retentatseite und eine Permeatseite, zur Abscheidung von Sauerstoff aus Luft, wobei die Membraneinheit mit ihrer Permeatseite über eine Leitung mit dem Brenner verbunden ist, wobei in einen Verbrennungsgasstrom ein Wärmetauscher derart geschaltet ist, dass dieser primärseitig von bei einer fossilen Befeuerung entstehendem heißem Verbrennungsgas beaufschlagbar ist und sekundärseitig die dem Wärmetauscher zustellbare Luft auf eine für den Betrieb der Membraneinheit erforderliche Temperatur aufheizbar und der Membraneinheit zuführbar ist. Die Erfindung betrifft auch ein Verfahren zum Betrieb einer solchen Verbrennungsanlage.

## Beschreibung

Die Erfindung betrifft ein Verfahren zum Betrieb einer Verbrennungsanlage sowie eine Verbrennungsanlage.

Bei der Verbrennung fossiler Energieträger beispielsweise zur Dampferzeugung in Kraftwerken ist das dabei entstehende Verbrennungsgas (Rauchgas) unter anderem mit CO2 belastet, welches als ein mutmaßlicher Hauptverursacher des klimaverändernden Treibhauseffekts gilt.

Mit dem Ziel einer dauerhaften Einlagerung (Sequestrierung) in geologische Formationen wie Erdöl- oder Erdgaslagerstätten, Aquifere oder Kohleflöze, kann CO2 mit unterschiedlichen Verfahren im Kraftwerksprozess abgetrennt werden.

Eine CO2-Abtrennung nach der Verbrennung (post combustion capture) aus dem N2/CO2/H2O-Gemisch des Verbrennungsgases am kalten Ende eines konventionellen Kraftwerksprozesses durch Absorption (chemisch und physikalisch), Adsorption, Verflüssigung oder durch Membranverfahren ist aufwändig. Die hierfür benötigte Energie wird z. B. dem Prozessdampf entnommen und führt zu erheblichen Wirkungsgradeinbußen. Der Vorteil der Post-Combustion-CO2-Abscheidung besteht allerdings darin, dass der Eingriff in den Kraftwerksprozess im Vergleich zu anderen Verfahren geringer ist und dieses Verfahren sich daher auch zur Nachrüstung bestehender Kraftwerke eignet.

Beim Kohlevergasungsverfahren zum Abtrennen des CO2 vor der Verbrennung (pre combustion capture) wird der Brennstoff Kohle zunächst vergast (integrated gasification combined cycle, IGCC-Kraftwerk) und das hierbei gebildete CO mit Wasserdampf zu H2 und CO2 reformiert (Wassergas-Reaktion oder "CO-Shift).

CO + H2O -> CO2 + H2

Das CO2 kann nun in höherer Konzentration und unter hohem Druck aus dem Brenngas durch physikalische Absorption entfernt werden. Der verbleibende Wasserstoff steht für die Stromerzeugung durch Gas- und Dampfturbinen zur Verfügung. Das Abgas, das zum Schluss das Kraftwerk verlässt, ist somit praktisch CO2-frei.

Beim sogenannten Oxyfuel-Verfahren wird anstelle der Luft als Oxidationsmittel Sauerstoff (englisch: oxygen) der Verbrennung zugeführt. Das Verfahren hat mehrere Vorteile.

Erstens ist es einfacher, CO2 aus dem mit CO2 hoch angereicherten Verbrennungsgas abzutrennen, als aus dem Abgasstrom nach der Verbrennung mit Luft, weil das Verbrennungsgas im Wesentlichen aus CO2 und H2O besteht. Zweitens sind die Verbrennungsgas-Energieverluste aufgrund des Wegfalls des Ballastanteils des Luft-Stickstoffs im Verbrennungsgas verringert und drittens, werden die vom Luft-Stickstoff verursachten Stickoxid-Emissionen vermieden.

Da eine Verbrennung in reinem Sauerstoff aber zu viel zu hohen Verbrennungstemperaturen führen würde, wird der von der Luft abgetrennte Sauerstoff einem rezirkulierten Teil des Verbrennungsgases beigemischt und erst dann der Verbrennung zugeführt. Das zurückgeführte Verbrennungsgas ersetzt somit den Luft-Stickstoff.

Luft kann durch verschiedene Verfahren in ihre Bestandteile (d.h. in erster Linie Stickstoff, Sauerstoff, daneben auch Edelgase) aufgetrennt werden. Die technisch ausgereifte, aber energieintensive, kryogen arbeitende Luftzerlegung (Tieftemperaturluftzerlegung) zerlegt die Luft in einem mechanisch getriebenen thermodynamischen Prozess in ihre wesentlichen Bestandteile Stickstoff und Sauerstoff und umfasst die Teilschritte Verdichtung der Luft, Entfernung von Wasserdampf und Kohlendioxid, fraktionierende Destillation (Rektifikation) sowie Kälteerzeugung durch Drosselentspannung.

Alternativ zu den kryogenen Luftzerlegungsanlagen sind inzwischen zur Abscheidung von Sauerstoff Aggregate auf Membranbasis vorgeschlagen worden (oxygen transport membrane OTM). Die Membraneffekte - osmotisch bzw. elektrochemisch oder auch durch die Partialdruckdifferenz des Sauerstoffs zwischen der Sauerstoff abgebenden Luftseite (Retentatseite) und der Sauerstoff aufnehmenden Seite (Permeatseite) indiziert - führen zu einer zumindest teilweisen Abscheidung des Sauerstoffs aus der Luft. Der Ersatz der kryogenen Luftzerlegungsanlage durch eine Membran wird als mögliche Option zur Wirkungsgradsteigerung bei CO2-freien Kraftwerkskonzepten angesehen.

Membranbasierte Anordnungen zur Luftzerlegung weisen allerdings den Nachteil auf, dass das Membranaggregat auf einer vergleichsweise hohen Betriebstemperatur im Bereich von 700 °C bis 1000 °C gehalten werden muss (Hochtemperatur-Membranverfahren), damit die Membran ihre Funktion ausführen kann. Es muss demnach Heizenergie dem Membranreaktor permanent zugeführt werden, damit dieser die erforderliche Prozesstemperatur für die Sauerstoffabscheidung aus der Luft aufweist.

Das Oxyfuel-Konzept, bei dem die Membran zentraler Bestandteil des Prozesses ist, ist beispielsweise vom AZEP-Projekt (advanced zero emission power plant, 5. Rahmenprogramm der Europäischen Union, Projektnummer: ENK5-CT-2001-00514; CORDIS, Forschungs- & Entwicklungsinformationsdienst der Gemeinschaft) bekannt oder auch vom Oxycoal-AC-Verfahren, das von der RWTH Aachen weiterentwickelt und von der RWE Power AG, der E.ON Energie AG, der Siemens AG, der Linde AG und der WS-Wärmeprozesstechnik GmbH begleitet und mitfinanziert wird.

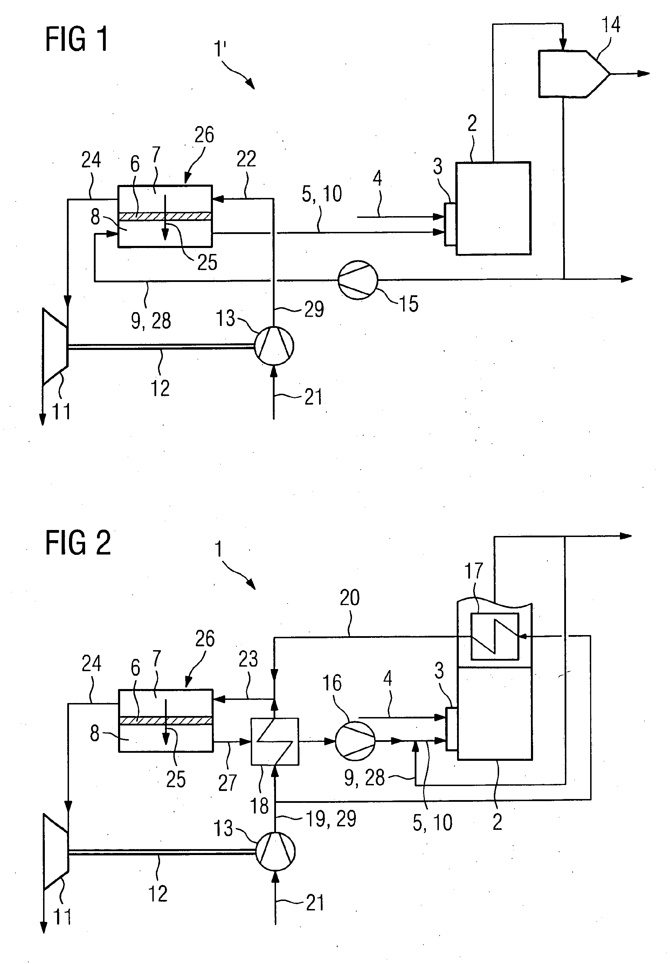

Die Schaltung des Verbrennungsprozesses des Oxycoal-AC-Verfahrens ist in Figur 1 skizziert. Ein wesentliches Merkmal dieses Prozesses ist die in das Anlagenschema integrierte Hochtemperatur-Membrananlage zur Sauerstoffgewinnung, die auf der Hochdruckseite mit Luft versorgt wird und die über eine ionenleitende Membran bei Betriebstemperaturen von etwa 800 °C Sauerstoff an den rezirkulierten Verbrennungsgasstrom abgibt. Durch diese Betriebsführung werden ein hohes Partialdruckgefälle und damit eine hohe Permeabilität für den Sauerstoff erreicht. Das von der Hochtemperatur-Membrananlage den Brennern zugeführte Gasgemisch besteht im Wesentlichen aus CO2, H2O und O2 und hat etwa den gleichen Sauerstoffanteil wie die Verbrennungsluft bei der konventionellen Verbrennung, so dass sich auch die in der Verbrennungstechnik üblichen Verbrennungstemperaturen einstellen sollten. Die Abtrennung des Wassers aus dem aus dem Prozess abgeführten Verbrennungsgas kann durch Kondensation erfolgen.

Diese Anordnung weist allerdings die Nachteile auf, dass, wird Sauerstoff an der Peripherie des Prozesses erzeugt, das Verbrennungsgas vom Dampferzeuger bis zur Peripherie transportiert und dass zur Reduzierung der Belastung der Sauerstoff aufnehmenden Seite der Membran durch Verunreinigungen des Verbrennungsgases eine Heißgasreinigung zwischengeschaltet werden muss.

Aufgabe der Erfindung ist es daher, ein Verfahren zum Betrieb einer Verbrennungsanlage sowie eine Verbrennungsanlage vorzuschlagen, die die o.g. Nachteile bei einer membranbasierten Sauerstoffabscheidung überwinden.

Diese Aufgabe wird erfindungsgemäß gelöst durch die Merkmale des Patentanspruchs 1 sowie des Patentanspruchs 13.

Weitere vorteilhafte Ausführungsformen sind in den Unteransprüchen genannt.

Im erfinderischen Verfahren wird zur Aufrechterhaltung der erforderlichen Prozesstemperatur der Membran Heizenergie zugeführt, wobei die Heizenergie aus dem beim Betrieb eines Brenners entstehenden Verbrennungsgas in einem Wärmetausch mit der Luft gewonnen wird, und die aufgeheizte Luft der Membran zugeführt wird.

Durch den Wärmetauschprozess und dessen vorteilhafte Ankopplung an das hohe Temperaturniveau des beim Betrieb des Brenners entstehenden Verbrennungsgases ergibt sich eine besonders effiziente Methode, die Luft auf die erforderliche Prozesstemperatur, also eine für den Betrieb der Membraneinheit erforderliche Temperatur, aufzuheizen und dann die aufgeheizte Luft dem Membranaggregat bereits temperaturrichtig zuzuführen. Hierdurch kann auf besonders einfache Weise die Membran auf die Betriebstemperatur, typischerweise 700 °C bis 1000 °C, gebracht werden.

Die Temperatur des in der Membran abgetrennten Sauerstoffs ist ebenfalls noch im Wesentlichen auf der ursprünglichen Prozesstemperatur und kann, bevor er in das Trägergas der Verbrennung (zumeist CO2) eingespeist wird, vorteilhafterweise zur Heizung eines Teils der Luft eingesetzt werden, die der Membran zugeführt werden soll.

Da der Partialdruck des Sauerstoffs die treibende Kraft der Sauerstoffabscheidung durch die Membran ist, ist es zweckmäßig, den durch die Membran von der Luft abgeschiedenen Sauerstoff von der Permeatseite der Membran wegzufördern.

Vorzugsweise wird ein Teil des Verbrennungsgases nach dem Wärmetausch mit der Luft dem Sauerstoff beigemischt und zwar so, dass das Gemisch etwa den gleichen Sauerstoffanteil wie die Verbrennungsluft bei einer konventionellen Verbrennung hat, so dass sich auch die in der Verbrennungstechnik üblichen Verbrennungstemperaturen einstellen können, wenn das Sauerstoff/Verbrennungsgas-Gemisch dem Brenner zur Verbrennung mit dem fossilen Brennstoff zugeführt wird.

Die im Wesentlichen noch auf die ursprüngliche Temperatur, d.h. Prozesstemperatur, aufgeheizte abgereicherte Luft, die das Membranaggregat auf der Retentatseite verlässt, steht vorteilhafterweise für weitere Nutzanwendungen zur Verfügung, sei es z.B. für die Nutzung der Wärmeenergie der aufgeheizten Luft durch Übertragung der Wärme auf einen Wasser-Dampf-Kreislauf oder zum Antrieb eines Expanders eines Gasturbosatzes, der vorteilhafterweise wiederum für die Verdichtung der Luft verwendet wird, die der Membran zugeführt werden soll.

Gegenüber dem Oxycoal-AC-Verfahren weist dieses Verfahren mehrere Vorteile auf. Erstens wird die Membran nicht mit Verbrennungsgas beaufschlagt, weswegen keine Heißgasreinigung erforderlich ist. Bei dieser Schaltung kommt die Membran ausschließlich mit Luft in Kontakt. Eine Schädigung des Membranmaterials durch die im Verbrennungsgas enthaltenen Verbrennungsprodukte ist ausgeschlossen.
Zweitens muss heißes Verbrennungsgas lediglich in der vergleichsweise kurzen Rezirkulationsleitung transportiert werden.
Drittens sind eine kompakte Bauweise des Wärmetauschers im Dampferzeuger sowie eine kompakte Bauweise der Heißluftleitungen möglich, da die Heißluft üblicherweise bei Drücken > 15 bara vorliegt.

Außerdem kann die Membrantechnologie in Oxycoal-Verfahren der ersten Generation integriert werden.

Die erfinderische Verbrennungsanlage, insbesondere zur Durchführung des erfinderischen Verfahrens, umfasst einen Brenner und eine Membraneinheit, umfassend eine Membran, eine Retentatseite und eine Permeatseite, zur Abscheidung von Sauerstoff aus Luft, wobei die Membraneinheit mit ihrer Permeatseite über eine Leitung mit dem Brenner verbunden ist, wobei in den Verbrennungsgasstrom ein Wärmetauscher derart geschaltet ist, dass dieser primärseitig von bei der fossilen Befeuerung entstehendem heißem Verbrennungsgas beaufschlagbar ist und sekundärseitig die dem Wärmetauscher zustellbare Luft auf eine für den Betrieb der Membraneinheit erforderliche Temperatur aufheizbar und der Membraneinheit zuführbar ist.

Vorzugsweise ist ein Sauerstoff/Luft-Wärmetauscher in die Leitung zwischen Permeatseite und Brenner geschaltet, um die Temperatur des in der Membran abgetrennten Sauerstoffs, die im Wesentlichen noch der ursprünglichen Prozesstemperatur entspricht, soweit abzusenken, dass ein rezirkulierter Verbrennungsgas- d.h. CO2-Strom durch die Mischung mit dem Sauerstoff nicht mehr oder nur noch unwesentlich in seiner Temperatur angehoben wird. Vorteilhafterweise ist der Sauerstoff/Luft-Wärmetauscher sekundärseitig der Retentatseite der Membran zur Zufuhr der aufgewärmten Luft vorgeschaltet.

Ein Zusammenführen der heißen Luft aus dem Wärmetausch mit dem Verbrennungsgas und der aufgewärmten Luft aus dem Wärmetausch mit dem abgetrennten Sauerstoff vor dem Beaufschlagen der Retentatseite ist zweckmäßig.

Vorteilhaft ist auch ein Gebläse in der mit der Permeatseite der Membran verbundenen Leitung hinsichtlich des Partialdruckgefälles von Sauerstoff über die Membran.

Weiterhin vorteilhaft ist eine Rezirkulationsleitung für Verbrennungsgas und die Verbindung dieser Rezirkulationsleitung mit der Sauerstoff führenden Leitung zwischen der Permeatseite der Membran und dem Brenner. Die Rückführung des beim Betrieb des Brenners entstandenen, im Wärmetausch mit der Luft abgekühlten Verbrennungsgases (zumeist CO2), und die Einspeisung des abgetrennten Sauerstoffs in dieses rezirkulierte Verbrennungsgas verhindern die hohen Verbrennungstemperaturen wie sie ansonsten bei der Verbrennung von fossilen Brennstoffen mit reinem Sauerstoff entstehen.

Vorteilhafterweise ist die Retentatseite der Membran mit einem Verdichter verbunden, dem Luft für die Zerlegung mit der Membran zuführbar ist, und der mit einem Expander gekoppelt ist, der mit der im Wesentlichen noch auf der ursprünglichen Temperatur, d.h. Prozesstemperatur, aufgeheizten sauerstoffabgereicherten Luft, die das Membranaggregat auf der Retentatseite verlässt, beaufschlagbar ist.

Die Membran ist vorzugsweise eine Sauerstoffionen leitende Membran.

Die Verbrennungsanlage umfasst zweckmäßigerweise einen fossil befeuerten Dampferzeuger.

Besonders vorteilhaft ist die Verbrennungsanlage in einem Dampfkraftwerk mit einer Dampfturbine, insbesondere, wenn dieses Dampfkraftwerk eine CO2-Abscheideeinrichtung umfasst, mittels derer das hoch angereicherte CO2 aus dem Verbrennungsgas abscheidbar ist.

Nachfolgend wird die Erfindung beispielhaft anhand der Zeichnungen näher erläutert.
Figur 1 Schaltung des Verbrennungsprozesses des Oxycoal-AC-Verfahrens
Figur 2 Prinzipschaltplan der erfinderischen Verbrennungsanlage, beispielhaft für ein kohlestaubgefeuertes Dampfkraftwerk.
Figur 1 zeigt die Schaltung des Verbrennungsprozesses des aus dem Stand der Technik bekannten Oxycoal-AC-Verfahrens. Die Verbrennungsanlage 1' weist einen Dampferzeuger 2 mit einem Brenner 3 auf. Der Dampferzeuger 2 ist in den Wasser-Dampf-Kreislauf einer nicht näher dargestellten Dampfturbinenanlage geschaltet.

Der Brenner 3 weist eine Zufuhrleitung für den fossilen Brennstoff 4 auf. Weiterhin ist eine Zufuhrleitung 5 für ein Sauerstoff/Verbrennungsgas-Gemisch vorhanden, die in den Brenner 3 einmündet. Im Dampferzeuger 2 wird der fossile Brennstoff zusammen mit dem Sauerstoff/Verbrennungsgas-Gemisch verbrannt, wodurch das Wasser im Rohrsystem des Dampferzeugers zu Dampf mit hoher Temperatur umgewandelt wird.

Beim Oxycoal-AC-Verfahren wird bei einer Prozesstemperatur mittels einer Membran 6 einer Membraneinheit 26, deren Retentatseite 7 mit Druckluft 22 versorgt wird, aus Luft Sauerstoff 25 abgeschieden und an einen rezirkulierten Verbrennungsgasstrom 9 abgegeben. Die zur Aufrechterhaltung der erforderlichen Prozesstemperatur notwendige Heizenergie wird aus dem Verbrennungsgas 9 gewonnen, das der Permeatseite 8 der Membran 6 über eine Rezirkulationsleitung 28 zu- und zusammen mit dem Sauerstoff 25 wieder abgeführt wird (sweep gas). Durch diese Betriebsführung werden auch ein hohes Partialdruckgefälle und damit eine hohe Permeabilität für den Sauerstoff 25 erreicht.

Das Sauerstoff/Verbrennungsgas-Gemisch 10 besteht im Wesentlichen aus CO2, H2O und O2 und hat etwa den gleichen Sauerstoffanteil wie die Verbrennungsluft bei der,konventionellen Verbrennung, so dass sich auch die in der Verbrennungstechnik üblichen Verbrennungstemperaturen einstellen sollten. Dieses Gemisch 10 wird dem Brenner 3 zur Reaktion mit dem fossilen Brennstoff 4 zugeführt.

Die durch den Entzug von Sauerstoff 25 mittels der Membran 6 zumindest teilweise abgereicherte Luft 24 wird einem Expander 11 zugeführt. Mit dem Expander 11 auf der gleichen Welle 12 gekoppelt ist ein Gasturbosatz, dessen Verdichter 13 Luft 21 ansaugt und die Membran 6 über eine Druckluftleitung 29 mit Druckluft 22 beaufschlagt.

Zur Reduzierung der Belastung der Membran 6 durch Verunreinigungen des rezirkulierten Verbrennungsgases 9 ist eine Heißgasreinigung 14 zwischen den Dampferzeuger 2 und die Membran 6 geschaltet. Ein Gebläse 15 unterstützt die Verbrennungsgaszirkulation.

Figur 2 zeigt als Ausführungsbeispiel der erfinderischen Verbrennungsanlage 1 den Prinzipschaltplan für ein kohlestaubgefeuertes Dampfkraftwerk. Die nachfolgenden Beschreibungen beschränken sich im Wesentlichen auf die Unterschiede zum Ausführungsbeispiel des Standes der Technik aus Figur 1, auf das bezüglich gleich bleibender Merkmale und Funktionen verwiesen wird. Im Wesentlichen gleich bleibende Bauteile werden grundsätzlich mit den gleichen Bezugszeichen beziffert.

Im Ausführungsbeispiel der Figur 2 wird zur Aufrechterhaltung der erforderlichen Prozesstemperatur der Membran 6 Heizenergie nicht direkt über das Verbrennungsgas zugeführt, sondern über die Luft 23, mit der die Retentatseite 7 der Membran 6 beaufschlagt werden soll. Diese Luft wird in einem Verbrennungsgas/Luft-Wärmetauscher 17 im Wärmetausch mit dem Verbrennungsgas auf 700 °C bis 1000 °C, vorzugsweise 800 °C bis 900 °C, aufgeheizt, um eine ausreichende Betriebstemperatur der Membran 6 zu gewährleisten.

Der sich auf der Permeatseite 8 der Membran ansammelnde Sauerstoff 25 (Permeat) wird mit Hilfe eines Gebläses 16 über die Leitung 27 weggefördert und dem Brenner 3 zugeführt.

Ein weiterer Wärmetauscher 18, der in diesen Sauerstoffpfad eingebaut ist hat die Aufgabe, die Sauerstofftemperatur von Membranbetriebstemperatur möglichst soweit abzusenken, dass - bei staubgefeuerten Dampferzeugern 2 - der über eine Rezirkulationsleitung 28 zurückgeführte Kohlendioxidstrom 9 durch die Mischung mit dem Sauerstoff 25 nicht mehr oder nur noch unwesentlich in seiner Temperatur angehoben wird. Die Sekundärseite dieses Wärmetauschers 18 wird dabei über eine Druckluftleitung 29 von einem Teil der Verdichterendluft 19 beaufschlagt, die hierbei aufgeheizt und dem, vom Dampferzeuger 2 kommenden heißen Luftstrom 20 zugemischt wird.

Durch diese Betriebsführung kommt es zu keinem direkten Kontakt zwischen dem Verbrennungsgas 9 und der Membran 6. Es ist daher auch keine Heißgasreinigung 14 notwendig.

## Patentansprüche

1. Verfahren zum Betrieb einer Verbrennungsanlage (1) mit einem mit einem fossilen Brennstoff betriebenen Brenner (2), wobei bei einer Prozesstemperatur mittels einer Membran (6) aus Luft Sauerstoff abgeschieden wird, wobei der abgeschiedene Sauerstoff dem Brenner (3) zur Verbrennung mit dem fossilen Brennstoff zugeführt wird, wobei ein heißes Verbrennungsgas gebildet wird,
**dadurch gekennzeichnet , dass** zur Aufrechterhaltung der erforderlichen Prozesstemperatur der Membran (6) Heizenergie zugeführt wird, wobei die Heizenergie aus dem heißen Verbrennungsgas in einem Wärmetausch mit der Luft gewonnen wird, wobei aufgeheizte Luft der Membran (6) zugeführt wird.

2. Verfahren nach Anspruch 1, bei dem die Luft im Wärmetausch mit dem Verbrennungsgas auf 700 °C bis 1000 °C, vorzugsweise 800 °C und 900 °C, aufgeheizt wird.

3. Verfahren nach Anspruch 1 oder 2, bei dem der mittels der Membran (6) abgetrennte Sauerstoff abgekühlt wird.

4. Verfahren nach Anspruch 3, bei dem der abgetrennte Sauerstoff in einem Wärmetausch mit Luft abgekühlt wird, wobei die Luft erwärmt wird.

5. Verfahren nach Anspruch 4, bei dem die erwärmte Luft mit der durch den Wärmetausch mit dem Verbrennungsgas aufgeheizten Luft gemischt wird und die derart aufgeheizte Luft der Membran (6) zugeführt wird.

6. Verfahren nach einem der vorhergehenden Ansprüche, bei dem der Sauerstoff von der Membran (6) weggefördert wird.

7. Verfahren nach einem der vorhergehenden Ansprüche, bei dem mindestens ein Teil des Verbrennungsgases nach dem Wärmetausch mit der Luft mit dem Sauerstoff gemischt wird.

8. Verfahren nach Anspruch 7, bei dem das Verbrennungsgas/Sauerstoff-Gemisch dem Brenner (3) zur Verbrennung mit dem fossilen Brennstoff zugeführt wird.

9. Verfahren nach einem der vorhergehenden Ansprüche, bei dem die durch den Sauerstoffentzug mittels der Membran (6) zumindest teilweise abgereicherte Luft einem Expander (11) zugeführt wird.

10. Verfahren nach Anspruch 9, bei dem der Expander (11) einen Verdichter (13) antreibt, der die Membran (6) permeatseitig mit komprimierter Luft beaufschlagt.

11. Verfahren nach einem der vorhergehenden Ansprüche, bei dem 80 bis 100% der Luft einem Wärmetausch mit dem heißen Verbrennungsgas zugeführt werden.

12. Verfahren nach einem der vorhergehenden Ansprüche, bei dem 0 bis 20% der Luft einem Wärmetausch mit dem aus der Luft abgeschiedenen Sauerstoff zugeführt werden.

13. Verbrennungsanlage (1), insbesondere zur Durchführung des Verfahrens nach einem der vorhergehenden Ansprüche, mit einem Brenner (3) und einer Membraneinheit (26), umfassend eine Membran (6), eine Retentatseite (7) und eine Permeatseite (8), zur Abscheidung von Sauerstoff aus Luft, wobei die Membraneinheit (26) mit ihrer Permeatseite (8) über eine Leitung (27) mit dem Brenner (3) verbunden ist,
**dadurch gekennzeichnet , dass** in einen Verbrennungsgasstrom ein Wärmetauscher (17) derart geschaltet ist, dass dieser primärseitig von bei einer fossilen Befeuerung entstehendem heißem Verbrennungsgas beaufschlagbar ist und sekundärseitig die dem Wärmetauscher (17) zustellbare Luft (19) auf eine für den Betrieb der Membraneinheit (26) erforderliche Temperatur aufheizbar und der Membraneinheit (26) zuführbar ist.

14. Die Verbrennungsanlage (1) nach Anspruch 13, bei der ein Sauerstoff/Luft-Wärmetauscher (18) primärseitig in die Leitung (27) zwischen Permeatseite (8) und Brenner (3) geschaltet ist.

15. Die Verbrennungsanlage (1) nach Anspruch 14, bei der der Sauerstoff/Luft-Wärmetauscher (18) sekundärseitig der Retentatseite (7) vorgeschaltet ist.

16. Die Verbrennungsanlage (1) nach einem der Ansprüche 13 bis 15, bei der die im Wärmetauscher (17) auf eine Prozesstemperatur aufheizbare Luft mit der im Sauerstoff/Luft-Wärmetauscher (18) sekundärseitig aufgewärmten Luft mischbar und der Retentatseite (7) zuführbar ist.

17. Die Verbrennungsanlage (1) nach einem der Ansprüche 13 bis 16, bei der ein Gebläse (16) in die Leitung (27) zwischen Permeatseite (8) und Brenner (3) geschaltet ist.

18. Die Verbrennungsanlage (1) nach einem der Ansprüche 13 bis 17, bei der eine Rezirkulationsleitung (28) für das Verbrennungsgas mit der Leitung (27) verbunden ist, über die die Permeatseite (8) mit dem Brenner (3) verbunden ist.

19. Die Verbrennungsanlage (1) nach einem der Ansprüche 13 bis 18, bei der die Retentatseite (7) mit einem Expander (11) zur Nutzung der thermischen und mechanischen Energie des Retentats verbunden ist.

20. Die Verbrennungsanlage (1) nach Anspruch 19, bei der der Expander (11) mit einem Verdichter (13) gekoppelt ist.

21. Die Verbrennungsanlage (1) nach Anspruch 20, bei der der Verdichter (13) ein Luftverdichter (13) ist, dem Luft (21) für die Zerlegung mit der Membran (6) zuführbar ist.

22. Die Verbrennungsanlage (1) nach Anspruch 21, bei der der Luftverdichter (13) über eine Leitung (29) mit der Retentatseite (7) verbunden ist.

23. Die Verbrennungsanlage (1) nach einem der Ansprüche 13 bis 22, bei der die Membran (6) eine Sauerstoffionen leitende Membran ist.

24. Die Verbrennungsanlage (1) nach einem der Ansprüche 13 bis 23, mit einem fossil befeuerten Dampferzeuger (2), der mit dem Brenner (3) befeuerbar ist.

25. Ein Dampfkraftwerk mit einer Dampfturbine und mit einer Verbrennungsanlage (1) nach einem der Ansprüche 13 bis 24.

26. Das Dampfkraftwerk nach Anspruch 25, umfassend eine CO2-Abscheideeinrichtung, mittels derer Co2 aus dem Verbrennungsgas abscheidbar ist.
